# EUROPEAN PATENT APPLICATION

(11) **EP 1 004 612 A1**
(43) Date of publication of application: **31.05.2000**
(21) Application number: 99309051.3
(22) Date of filing: 15.11.1999
(51) Int. Cl.: C08G 77/10, C08J 3/28, C09D 183/06

(54) **Vinyl ether-functional organopolysiloxanes and their use in radiation-curable silicone compositions**

(30) Priority: 25.11.1998 US 200547
(71) Applicant: DOW CORNING CORPORATION, Midland Michigan 48686-0994 (US)
(72) Inventor: Glover, Shedric Oneal, Midland, Michigan 48640 (US); Lee, Chi-Long, Midland, Michigan 48642 (US); Tong, Wen-Hong, Midland, Michigan 48640 (US)
(74) Representative: Kyle, Diana

(57) **Abstract**

A method of making vinyl ether functional organopolysiloxanes is disclosed. Radiation curable silicone composition comprising the vinyl ether functional organopolysiloxane obtained by said method, a cationic photoinitiator, a free radical photoinitiator and dodecylphenol are also disclosed. These radiation curable silicone compositions are useful as release coating compositions, which are especially suitable for release of pressure sensitive adhesives.

## Description

Our invention provides a method of making vinyl ether functional organopolysiloxanes. Our invention also provides a radiation curable silicone composition comprising the vinyl ether functional organopolysiloxane obtained by the method of our invention, a cationic photoinitiator, a free radical photoinitiator and dodecylphenol. Our compositions can further comprise a vinyl ether compound which is free of silicon atoms. These radiation curable silicone compositions are useful as release coating compositions which are especially suitable for release of pressure sensitive adhesives.

The curing rate of radiation curable silicone compositions for coating applications or adhesive applications is a very important factor in determining the effectiveness of the composition. The problem with free radical curing systems is their inhibition in the presence of oxygen. Thus, these systems require costly inert gas facilities to ensure a satisfactory cure rate. Cationic curing systems are also common and have no oxygen inhibition problems but have the problem of moisture sensitivity.

Efforts to overcome these problems have been disclosed in the art. Furthermore, radiation curable compositions containing vinyl ether functional organosilicon compounds have also been described in the art. For example, U.S. Patent 4,617,238 discloses a photopolymerizable composition comprising (a) an organopolysiloxane having at least one Si-bonded vinyloxy functional group of the formula H₂C=CH-O-G-, where G is alkylene (such as propylene) or alkylene interrupted by at least one divalent heteroradical selected from -O-, divalent phenylene, or substituted divalent phenylene or combination of such heteroradicals, and (b) an onium salt catalyst. A method is described wherein the vinyl ether group is introduced into the organopolysiloxane by addition (hydrosilylation) of compounds with an allyl and a vinyl ether group to an SiH group of the organopolysiloxane in the presence of a platinum catalyst. In this method, only the allyl group is added to the SiH group while the vinyl ether group is preserved and thus only one vinyl ether group for each SiH group can be incorporated into the siloxane molecule at any given time.

European Patent Publication 0462389 teaches thermosetting organopolysiloxanes with oxyalkylene vinyl ether groups bonded by SiOC groups and the vinyl groups may be substituted by alkyl groups. A method is also taught therein for the preparation of these compounds and their application as photochemically thermosetting polysiloxanes in encapsulating compounds, as non-stick coating compounds for flat carriers or as modified additives in compounds which can be thermoset radically, cationically or by UV or electron radiation.

U.S. Patent 5,270,423 discloses organosilicon compounds with a siloxane portion of the general formula - OR'OCH=CHR" linked via an SiOC bond wherein R' is a divalent hydrocarbon radical and R" is hydrogen or an alkyl radical which are useful in radiation curable compositions, in which they are mixed with an initiator. The compositions are particularly useful in UV radiation curable coatings.

U.S. Patent 5,594,042 discloses radiation curable compositions comprising vinyl ether functional siloxanes and aromatic iodonium salt or aromatic sulfonium salt photoinitiators which cure upon exposure to ultraviolet or electron beam radiation. The vinyl ether groups are linked to the silicon atom on the siloxane through an SiOC bond and the photoinitiators are disclosed as being preferably either diaryliodonium salts of sulfonic acids or triarylsulfonium salts of sulfonic acids.

U.S. Patent 5,629,095 discloses vinyl ether functional siloxane resins, radiation curable coating compositions comprising a vinyl ether functional siloxane resin and a photocleavable acid and a coated article obtained by applying the radiation curable coating composition to a substrate and then exposing the coating to radiation in an amount sufficient to cure the coating. The vinyl ether group in the siloxane resin is attached to the silicone atom through an SiOC bond.

In contrast to the above described compositions, our radiation curable silicone compositions have a good curing rate in moist air without requiring the protection of an inert gas.

Our invention provides a method of making vinyl ether functional organopolysiloxanes.

Our invention also provides radiation curable silicone compositions comprising a vinyl ether functional organopolysiloxane obtained by the method of this invention, a cationic photoinitiator, a free radical photoinitiator and dodecylphenol. The radiation curable silicone compositions of our invention further comprises a vinyl ether compound which is free of silicon atoms.

Our invention produces radiation curable silicone compositions which are useful as release coating compositions, suitable for release of pressure sensitive adhesives and have a good curing rate in moist air.

Our method of making a vinyl ether functional organopolysiloxane comprises (I) mixing (a) at least one alkyltriacetoxysilane and (b) water, (II) removing acetic acid from the product of (I), (III) adding (c) a vinyl ether compound having the formula HOROCH=CH₂ wherein R is a divalent hydrocarbon group having from 1 to 20 carbon atoms to the product of (II), (IV) removing acetic acid from the product of (III), (V) adding (d) at least one hydroxy-terminated polydiorganosiloxane to the product of (IV), and (VI) removing acetic acid from the product of (V).

Step (I) comprises mixing (a) at least one alkyltriacetoxysilane and (b) water. The alkyltriacetoxysilane (a) is exemplified by methyltriacetoxysilane, ethyltriacetoxysilane, propyltriacetoxysilane, butyltriacetoxysilane, hexyltriacetoxysilane, octyltriacetoxysilane, decyltriacetoxysilane, combinations thereof. Preferably component (a) is selected from methyltriacetoxysilane, ethyltriacetoxysilane or a mixture of methyltriacetoxysilane and ethyltriacetoxysilane. If a mixture of methyltriacetoxysilane and ethyltriacetoxysilane is used, it is generally used in a weight ratio of methyltriacetoxysilane to ethyltriacetoxysilane of from 1 to 99, and preferably from 40 to 60.

The water (b) is preferably clear water, and most preferably is distilled water, deionized water or a mixture of distilled water and deionized water.

Generally, components (a) and (b) are present in an amount to provide a molar ratio of component (a) to component (b) of from 1.2:1 to 2:1, and preferably from 1.5:1 to 2:1.

Step (II) comprises stripping acetic acid from the product of (I). Methods of removing volatile components are well known in the art and need no extensive delineation herein. Any method of removing volatile components can be used in the present invention, such methods exemplified by heating, heating and applying a vacuum, molecular stills, rotoevaporators and wipe film evaporators. It is preferred in the method of this invention that the acetic acid be removed by heating the product of (I) to a temperature of at least 70°C. under vacuum.

Step (III) comprises adding (c) a vinyl ether compound having the formula HOROCH=CH₂ wherein R is a divalent hydrocarbon group having from 1 to 20 carbon atoms to the product of (II). Divalent hydrocarbon groups suitable as R are exemplified by alkylene groups such as ethylene, propylene, butylene, pentylene, trimethylene, 2-methyltrimethylene, pentamethylene, hexamethylene, 3-ethyl-hexamethylene, octamethylene, -CH₂(CH₃)CH-, -CH₂CH(CH₃)CH₂-, -(CH₂)₁₈- and cycloalkylene groups such as cyclohexylene, arylene groups such as phenylene, combinations of divalent hydrocarbon groups such as benzylene. Also suitable as R are divalent halohydrocarbon groups wherein one or more hydrogen atoms have been replaced by halogen, such as fluorine, chlorine or bromine exemplified by CH₂CH₂CF₂CF₂CH₂CH₂-. Preferably R² is butylene.

Generally, component (c) is present in an amount to provide a molar ratio of vinyl ether groups to acetoxy groups of from 0.9:1 to 1.1:1, and preferably from 0.95:1 to 1:1.

Step (IV) comprises removing acetic acid from the product of (III). The method of removing acetic acid from the product of (III) is as described above for Step (II), including preferred embodiments thereof. It is preferred in the method of this invention that the acetic acid be removed by heating the product of (III) to a temperature of above 70°C. under vacuum.

Step (V) comprises adding (d) at least one hydroxy-terminated polydiorganosiloxane to the product of (IV). The hydroxy-terminated polydiorganosiloxanes are exemplified compounds having the formula HO-(R¹₂SiO)ₙ-H wherein each R¹ is a monovalent hydrocarbon group having from 1 to 20 carbon atoms and n has a value such that the viscosity of the hydroxy-terminated polydiorganosiloxane is from 5 to 50,000 mm²/s. The monovalent hydrocarbon group of R¹ is exemplified by alkyl groups such as methyl, ethyl, propyl, butyl, hexyl, octyl and decyl; cycloaliphatic groups such as cyclohexyl; aryl groups such as phenyl, tolyl and xylyl; aralkyl groups such as benzyl and phenylethyl and olefinic hydrocarbon groups such as vinyl, allyl, methallyl, butenyl and hexenyl, octenyl, cyclohexenyl and styryl. Alkenyl groups are preferably terminally unsaturated. It is highly preferred that R is methyl. The monovalent hydrocarbon group can also be any monovalent hydrocarbon group noted above which has at least one of its hydrogen atoms replaced with a halogen, such as fluorine, chlorine or bromine and these monovalent hydrocarbon groups, are exemplified by CF₃CH₂CH₂- and C₄F₉CH₂CH₂-. Each R can be the same or different, as desired. A combination of two or more different types of hydroxy-terminated polydiorganosiloxanes can also be used. Preferably (d) is a hydroxy-terminated polydimethylsiloxane having a viscosity generally from 5 to 50,000 mm²/s, and preferably from 10 to 1,000 mm²/s, or is a combination of a hydroxy-terminated polydimethylsiloxane having a viscosity from 5 to 1,000 mm²/s and a hydroxy-terminated polydimethylsiloxane having a viscosity from 1,000 to 100,000 mm²/s. When a combination of two or more hydroxy-terminated polydiorganosiloxanes are used, they may be added as a mixture to the product of Step (IV) or may be added consecutively to the product of Step (IV).

Generally, component (d) is present in an amount to provide a molar ratio of hydroxy groups to acetoxy groups of from 1.2:1 to 2:1, and preferably from 1.5:1 to 2:1.

Step (VI) comprises removing acetic acid from the product of (V). The method of removing acetic acid from the product of (V) is as described above for Step (II), including preferred embodiments thereof. It is preferred in the method of this invention that the acetic acid be removed by heating the product of (V) to a temperature of above 70°C. under vacuum.

The method of this invention can further comprise adding a water soluble non-reactive diluent prior to step (II). The water soluble non-reactive diluent is exemplified by tetrahydrofuran, methylene chloride, acetone, diethyl ether, dioxane and acetonitrile. It is preferred that the diluent is tetrahydrofuran.

The water soluble non-reactive diluent is added in amount such that the weight ratio of water soluble diluent to water is from 0.1:1 to 10:1, and is preferably from 8:1 to 10:1.

The method of this invention can further comprise adding water to the product of (VI). The water is preferably clear water, and most preferably is distilled water, deionized water, or a mixture of distilled water and deionized water. The amount of water added to the product of (VI) is present in an amount to provide a molar ratio of water to acetoxy groups of from 1:1 to 1.5:1, and preferably from 1:1 to 1.1:1.

This invention further relates to a radiation curable silicone composition comprising: (A) a vinyl ether functional organopolysiloxane obtained by a method comprising (I) mixing (a) at least one alkyltriacetoxysilane and (b) water, (II) removing acetic acid from the product of (I), (III) adding (c) a vinyl ether compound having the formula HOROCH=CH₂ wherein R is a divalent hydrocarbon group having from 1 to 20 carbon atoms to the product of (II), (IV) removing acetic acid from the product of (III), (V) adding (d) at least one hydroxy-terminated polydiorganosiloxane to the product of (IV), and (VI) removing acetic acid from the product of (V), (B) a cationic photoinitiator, (C) a free radical photoinitiator, and (D) dodecylphenol. The method of obtaining the vinyl ether functional organopolysiloxane can further comprise adding a water soluble non-reactive diluent prior to step (II).

With respect to component (A), steps (I)-(VI) and components (a)-(d) and the water soluble non-reactive diluent are as described hereinabove in the method of this invention including preferred embodiments and amounts thereof.

It is preferred for purposes of this invention that from 20 to 99 wt% of the vinyl ether functional organopolysiloxane (A) be used, and it is highly preferred that from 85 to 90 wt% be used, said wt% being based on the total weight of the radiation curable silicone composition.

Component (B) in the compositions of this invention is cationic photoinitiator. Suitable cationic photoinitiators are selected from onium salts, diaryliodonium salts of sulfonic acids, triarylsulfonium salts of sulfonic acids, diaryliodonium salts of boronic acids or triarylsulfonium salts of boronic acids.

The onium salts are preferably selected from R³₂I⁺MXₙ⁻, R³₃S⁺MXₙ⁻, R³₃Se⁺MXₙ⁻, R³₄P⁺MXₙ⁻ and R³₄N⁺MXₙ⁻, wherein each R³ is an organic group having from 1 to 30 carbon atoms exemplified by aromatic carbocyclic groups having from 6 to 20 carbon atoms. Each R³ can be substituted with from 1 to 4 monovalent hydrocarbon groups exemplified by alkoxy groups having from 1 to 8 carbon atoms, alkyl groups having from 1 to 8 carbon atoms, nitro, chloro, bromo, cyano, carboxyl, mercapto and aromatic heterocyclic groups exemplified by pyridyl, thiophenyl and pyranyl. The symbol M in the formulae hereinabove are metals or metalloids which include transition metals exemplified by Sb, Fe, Sn, Bi, Al, Ga, In, Ti, Zr, Sc, V, Cr, Mn, Cs, rare earth metals exemplified by lanthanides, for example, Cd, Pr and Nd and metalloids exemplified by B, P and As. MXₙ⁻ is a non-basic, non-nucleophilic anion exemplified by BF₄⁻, PF₆⁻, AsF₆⁻, SbF₆⁻, SbCl₆⁻, HSO₄⁻, ClO₄⁻, FeCl₄⁼, SnCl₆⁻ and BiCl₅⁼.

Preferred onium salts are exemplified by bis-diaryl iodonium salts, for example, bis(dodecyl phenyl) iodonium hexafluoroarsenate, bis(dodecylphenyl) iodonium hexafluoroantimonate and dialkylphenyl iodonium hexafluoroantimonate.

Diaryliodonium salts of sulfonic acids, triarylsulfonium salts of sulfonic acids, diaryliodonium salts of boronic acids and triarylsulfonium salts of boronic acids are also suitable as the cationic photoinitiator(B). Preferred diaryliodonium salts of sulfonic acid are diaryliodonium salts of perfluoroalkylsulfonic acids and diaryliodonium salts of aryl sulfonic acids. Preferred diaryliodonium salts of perfluoroalkylsulfonic acids are exemplified by diaryliodonium salts of perfluorobutanesulfonic acid, diaryliodonium salts of perfluoroethanesulfonic acid, diaryliodonium salts of perfluoro-octanesulfonic acid and diaryliodonium salts of trifluoromethane sulfonic acid. Preferred diaryliodonium salts of aryl sulfonic acids are exemplified by diaryliodonium salts of para-toluene sulfonic acid, diaryliodonium salts of dodecylbenzene sulfonic acid, diaryliodonium salts of benzene sulfonic acid and diaryliodonium salts of 3-nitrobenzene sulfonic acid.

Preferred triarylsulfonium salts of sulfonic acid are triarylsulfonium salts of perfluoroalkylsulfonic acids and triarylsulfonium salts of aryl sulfonic acids. Preferred triarylsulfonium salts of perfluoroalkylsulfonic acids are exemplified by triarylsulfonium salts of perfluorobutanesulfonic acid, triarylsulfonium salts of perfluoroethanesulfonic acid, triarylsulfonium salts of perfluoro-octanesulfonic acid and triarylsulfonium salts of trifluoromethane sulfonic acid. Preferred triarylsulfonium salts of aryl sulfonic acids are exemplified by triarylsulfonium salts of para-toluene sulfonic acid, triarylsulfonium salts of dodecylbenzene sulfonic acid, triarylsulfonium salts of benzene sulfonic acid and triarylsulfonium salts of 3-nitrobenzene sulfonic acid.

Preferred diaryliodonium salts of boronic acids and triarylsulfonium salts of boronic acids are compounds such as those disclosed in European Patent Application 0562922. Preferred diaryliodonium salts of boronic acids include diaryliodonium salts of perhaloarylboronic acids and preferred triarylsulfonium salts of boronic acids are the triarylsulfonium salts of perhaloarylboronic acid.

Preferably the amount of cationic photoinitiator (B) is from 0.1 to 5 wt% based on the total weight of the composition, and it is highly preferred to use from 1 to 3 wt% based on the total weight of the radiation curable silicone composition.

Component (C) is a free radical photoinitiator. The free radical photoinitiators of this invention can be any benzoins exemplified by benzoin alkyl ethers, acetophenones exemplified by dialkoxyacetophenones, dichloroacetophenones and trichloroacetophenones, benzils exemplfied by benzil ketals, quinones and O-acylated -α-oximinoketones. Preferably, the free radical photoinitiator is a compound having the formula 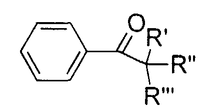 wherein R' is selected from -H, an alkoxy group or a halogen atom, R" is selected from -OH, an alkoxy group or a halogen atom, R''' is selected from -H, an alkyl group or a halogen atom. Preferred embodiments of this compound are (i) where R' is -H, R" is -OH and R"' is methyl or phenyl, (ii) where R' is -H, R" is an alkoxy group and R"' is phenyl (for benzoin alkyl ethers), (iii) where both R' and R" are alkoxy groups and R"' is phenyl (for benzil ketals), (iv) where both R' and R" are alkoxy groups and R"' is -H (for dialkoxyacetophenones) and (v) where both R' and R" are -Cl and R"' is -Cl or -H (for di- and tri- chloroacetophenones). It is especially preferred for the compositions that component (C) is Darocure® 1173 (2-hydroxy-2-methyl-1-phenyl-propan-1-one).

Preferably the amount of free radical photoinitiator (C) is from 0.5 to 5 wt% based on the total weight of the composition, and it is highly preferred to use from 1 to 3 wt% based on the total weight of the radiation curable silicone composition.

Component (D) in the compositions of this invention is dodecylphenol. For the purposes of this invention, "dodecylphenol" denotes a compound having the formula C₁₂H₂₅C₆H₄OH or a mixture comprising isomers of a compound having the formula C₁₂H₂₅C₆H₄OH.

Preferably the amount of dodecylphenol (D) is from 0.5 to 10 wt% based on the total weight of the composition, and it is highly preferred to use from 1 to 5 wt% based on the total weight of the radiation curable silicone composition.

The compositions of this invention can further comprise (E) a vinyl ether compound which is free of silicon atoms. Component (E) is exemplified by ethyl vinyl ether, propyl vinyl ether, butyl vinyl ether, isobutyl vinyl ether, dodecyl vinyl ether, octadecyl vinyl ether, ethylene glycol monovinyl ether, diethylene glycol divinyl ether, butanediol monovinyl ether, butanediol divinyl ether, hexanediol divinyl ether, ethylene glycol butyl vinyl ether, triethylene glycol methyl vinyl ether, cyclohexanedimethanol divinyl ether, 2-ethylhexyl vinyl ether, poly-THF-divinyl ether 290, Pluriol-E-200-divinyl ether, cyclohexyl vinyl ether, tert-butyl vinyl ether, tert-amyl vinyl ether, ethylene glycol divinyl ether, diethylene glycol monovinyl ether, hexanediol monovinyl ether, tetraethylene glycol divinyl ether, trimethylol propane trivinyl ether, aminopropyl vinyl ether and 2-diethylaminoethyl vinyl ether. Preferably component (E) is a compound having the formula (CH₂=CHOR⁴)_{d}CR⁵_{4-d} wherein R⁴ is a divalent hydrocarbon group having from 1 to 20 carbon atoms, R⁵ is hydrogen or a monovalent hydrocarbon group having from 1 to 20 carbon atoms and d has a value of 1 to 3. The monovalent and divalent hydrocarbon groups are as delineated above for the vinyl ether functional organopolysiloxane, including preferred embodiments thereof. Preferably R⁴ is an alkylene group having the formula -(CH₂)ₙ- wherein n has a value of 1 to 20, d has a value of 1 and R⁵ is hydrogen. It is highly preferred that component (E) is a compound having the formula CH₂=CHO(CH₂)₁₁CH₃ (dodecyl vinyl ether).

Preferably the amount of organic vinyl ether (E) is from 1 to 20 parts by weight, and it is highly preferred to use from 1 to 5 parts by weight per 100 parts by weight of the radiation curable silicone composition.

The compositions of this invention can further comprise a release modifier. Preferred release modifiers are vinyl ether functional siloxane resins having the formula 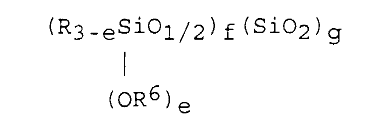 wherein R is a monovalent hydrocarbon group having from 1 to 20 carbon atoms, R⁶ is selected from a monovalent hydrocarbon having from 1 to 8 carbon atoms or a group having the formula -R⁷OCH=CH₂ wherein R⁷ is a divalent hydrocarbon group having from 2 to 20 carbon atoms, e has a value 1 to 3, f is a mole percent of from greater than 0 to less than 100 and g is a mole percent of from greater than zero to less than 100, with the proviso that the sum of f+g is equal to 100 mole percent and with the proviso that there is at least one -OR⁷OCH=CH₂ group per molecule. The monovalent hydrocarbon groups of R⁶ and the divalent hydrocarbon groups of R⁷ are as delineated hereinabove including preferred embodiments thereof. It is preferred for purposes of this invention that R⁶ is methyl, R⁷ is butylene and e has a value of 1 or 2. The vinyl ether functional siloxane resins are disclosed in U.S. Patent 5,629,095, which teaches vinyl ether functional siloxane resins which are useful as release modifiers in the compositions of this invention.

Preferably the amount of release modifier is from 10 to 80 parts by weight, and it is highly preferred to use from 20 to 50 parts by weight per 100 parts by weight of the radiation curable silicone composition.

The radiation curable silicone compositions of this invention can also contain ingredients exemplified by reinforcing and extending fillers, hydrocarbons and halohydrocarbons, colorants, dyes, preservatives, fragrances, stabilizers, adhesion modifiers or diluents.

The radiation curable silicone compositions of this invention can be prepared by mixing the materials described hereinabove and any optional components in any order, using any suitable mixing means, such as a spatula, a drum roller, a mechanical stirrer, a three-roll mill, a sigma blade mixer, a bread dough mixer or a two-roll mill.

This invention further relates to a method of making a radiation curable silicone composition comprising mixing components (A)-(D) described hereinabove. The method can further comprise adding (E) a vinyl ether compound which is free of silicon atoms and any of the optional ingredients recited above during step (I). Components (A)-(E) and the optional ingredients are as described above, including preferred embodiments and amounts thereof.

The present invention further relates to a method of making an article of manufacture comprising (I) applying a radiation curable silicone composition comprising components (A)-(D) described hereinabove, to a solid substrate to form a coating, and (II) exposing the coating to an energy source selected from (i) actinic radiation or (ii) actinic radiation in combination with heat in an amount sufficient to cure the coating.

The composition of (I) can further comprise (E) a vinyl ether compound which is free of silicon atoms and any of the optional ingredients recited above. Components (A)-(E) and the optional ingredients are as described above, including preferred embodiments and amounts thereof.

The coating may be applied by any suitable manner known in the art, such as by spreading, brushing, extruding, spraying, gravure, kiss-roll and air-knife.

In a preferred embodiment, the solid substrate is a flexible sheet material such as paper, polyolefin film, polyolefin-coated paper or foil. Other suitable solid substrates that can be coated by the method of this invention include other cellulosic materials such as wood, cardboard and cotton; metallic materials such as aluminum, copper, steel and silver; siliceous materials such as glass and stone; and synthetic polymer materials such as polyolefins, polyamides, polyesters and polyacrylates. As to form, the solid substrate can be substantially sheetlike, such as a peelable release liner for pressure sensitive adhesive; a fabric or a foil; or substantially three-dimensional in form.

By actinic radiation, it is meant ultraviolet light; electron beam radiation; or alpha-, beta-, gamma- or x-rays. By heat, it is meant infrared radiation, hot-air, microwave radiation, etc. Actinic radiation is frequently accompanied by heat and the use of a combination of the two falls within the scope of the present invention. Herein the term "cure", as applied to the composition and method of this invention, generally denotes a chemical change which leads to a change in the state of the composition from a liquid to a solid. Curing itself may be achieved in any of the known ways, including passing a coated substrate under the desired source of radiation, for example a UV lamp, at a predetermined rate and exposing a completely coated substrate to radiation by switching on the required energy source for a predetermined time.

In a preferred embodiment, a flexible sheet material, such as paper, metal foil or tapestock, is coated with a thin coating of the radiation curable silicone composition, preferably in a continuous manner and the said coated material is then heated and/or irradiated to rapidly cure the coating, to provide a sheetlike material bearing on at least one surface thereof an adhesive-releasing coating. The adhesive-releasing coating is subsequently brought into contact with an adhesive, preferably in an in-line manner, to form an article having a peelable, i.e. releasable, adhesive/coating interface. Examples of such an article include, adhesive labels having a peelable backing, adhesive tape in roll form and adhesive packaged in a strippable container. The adhesive can be a non-silicone-based pressure sensitive adhesive such as the well-known acrylic or rubber types or a silicone-based pressure sensitive adhesive such as the peroxide- or platinum-curable polydiorganosiloxane-based adhesives. The adhesive can also be those used in foods, asphalt and gum polymers. The compositions of the present invention are useful as release coatings for pressure sensitive adhesives, as protective coatings and decorative coatings.

In the examples hereinbelow, all amounts (parts and percentages) are by weight unless otherwise indicated. Cure time for a composition means the time interval required for the composition, when coated onto S2S Kraft paper or polypropylene film, at a thickness of 0.7 grams of silicone per square meter of paper or film, to attain the no smear, no migration, no rub-off condition. Viscosity was measured in millipascal-seconds (1 millipascal-second = 1 centipoise).

### Example 1

In a round bottom flask equipped with a stirrer, dropping funnel, condenser and drying tube was placed 45.2 grams (g) of a mixture of 44 wt% of methyltriacetoxysilane, 49 wt% of ethyltriacetoxysilane, 1 wt% HOAc and 6 wt% high boiling impurities. To the flask was added drop-wise from an addition funnel, 1.8 g of water diluted in 18 g of THF over a period of 1 hour. The reaction was allowed to proceed with agitation for an additional 0.5 hour. Acetic acid and THF was removed by stripping them off at 70°C. under reduced pressure. After removing water and acetic acid, 32 g of 4-hydroxy butyl vinyl ether (HO(CH₂)₄OCH=CH₂) was added over a period of 15 minutes with an addition funnel. The reaction continued for an additional 1.5 hours at room temperature after the 4-hydroxy butyl vinyl ether addition was complete. Acetic acid was removed by stripping it off at 70°C. under reduced pressure. 120 g of a hydroxy-terminated polydimethylsiloxane having a viscosity of 50 mm²/s was added to the flask and the reaction was continued overnight at room temperature. Acetic acid was stripped off at 70°C. under reduced pressure to yield the final vinyl ether functional organopolysiloxane.

### Example 2

The following composition was prepared from the above final product. To a suitable container, 9.7 g of vinyl ether functional organopolysiloxane prepared in Example 1 was added. Next, 0.20 g of a 60/40 weight to weight mixture of tolyl (dodecylphenyl) iodonium trifluoromethanesulfonate diluted in dodecylphenol was added and mixed thoroughly. Next, 0.1 g of Darocure® 1173 (2-hydroxy-2-methyl-1-phenyl-propan-1-one from Ciba Geigy, Terrytown, N.Y.) was added and mixed thoroughly. Approximately 1.1 milligram of this sample was transferred to an aluminum differential scanning calorimeter pan. The pan was placed in a differential scanning photocalorimeter (DPC) equipped with a high intensity mercury arc lamp and irradiated at an intensity of 35 mW/cm². Reaction rate and the extent of cure as measured by rate of heat evolved under moist air conditions, slope, was 302 watts/gram/minute and a peak maximum of 11 watts/gram, respectively.

## Claims

1. A method of making a vinyl ether functional organopolysiloxane comprising
(I) mixing
(a) at least one alkyltriacetoxysilane; and
(b) water;
(II) removing acetic acid from the product of (I);
(III) adding (c) a vinyl ether compound having the formula HOROCH=CH₂ wherein R is a divalent hydrocarbon group having from 1 to 20 carbon atoms to the product of (II);
(IV) removing acetic acid from the product of (III) ;
(V) adding (d) a hydroxy-terminated polydiorganosiloxane to the product of (IV); and
(VI) removing acetic acid from the product of (V).

2. A method according to claim 1 wherein the method further comprises adding a water soluble non-reactive diluent prior to step (II).

3. A method according to claim 1 or 2, wherein the method further comprises adding water to the product of (VI).

4. A method according to any of claims 1 to 3, wherein the molar ratio of component (a) to component (b) is from 1.2:1 to 2:1.

5. A method according to any of claims 1 to 4, wherein component (c) is added in a sufficient quantity to provide a molar ratio of vinyl ether groups to acetoxy groups of from 0.9:1 to 1.1:1.

6. A radiation curable silicone composition comprising:
(A) a vinyl ether functional organopolysiloxane obtained by the method of any of claims 1 to 3,
(B) a cationic photoinitiator;
(C) a free radical photoinitiator; and
(D) dodecylphenol

7. A composition according to claim 6, wherein (C) is a compound having the formula: 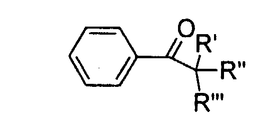 wherein R' is selected from -H, an alkoxy group and a halogen atom, R" is selected from -OH, an alkoxy group and a halogen atom and R''' is selected from -H, an alkyl group and a halogen atom.

8. A composition according to claim 6 or 7, wherein the composition further comprises (E) a vinyl ether compound which is free of silicon atoms.

9. A composition according to any of claims 6 to 8 wherein the composition further comprises a vinyl ether functional siloxane resin having the formula 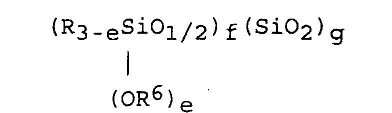 wherein R is a monovalent hydrocarbon group having from 1 to 20 carbon atoms, R⁶ is selected from a monovalent hydrocarbon having from 1 to 8 carbon atoms or a group having the formula -R⁷OCH=CH₂ wherein R⁷ is a divalent hydrocarbon group having from 2 to 20 carbon atoms, e has a value 1 to 3, f is a molar percent of from greater than 0 to less than 100 and g is a molar percent of from greater than zero to less than 100, with the proviso that the sum of f+g is equal to 100 molar percent, and with the proviso that there is at least one -OR⁷OCH=CH₂ group per molecule.

10. A method of making an article of manufacture comprising:
(I) applying the radiation curable composition of any of claims 6 to 9 to a solid substrate to form a coating; and
(II) exposing the coating to an energy source selected from (i) actinic radiation and (ii) actinic radiation in combination with heat in an amount sufficient to cure the coating.
